# EUROPÄISCHE PATENTSCHRIFT

(11) **EP 1 580 066 B1**
(45) Veröffentlichungstag und Bekanntmachung des Hinweises auf die Patenterteilung: **15.11.2006**
(21) Anmeldenummer: 05100503.1
(22) Anmeldetag: 26.01.2005
(51) Int. Cl.: B60N 2/06, B60R 1/06, B60N 2/14, B60R 1/02, E01C 19/00

(54) **Baufahrzeug zur Bodenbearbeitung mit einem Rückspiegelpaar**
Construction vehicle for soil working with a pair of rear view mirrors
Véhicule de construction pour le labourage avec une paire de rétroviseurs

(30) Priorität: 26.03.2004 DE 202004004946 U
(43) Veröffentlichungstag der Anmeldung: 28.09.2005
(73) Patentinhaber: Hamm AG, 95643 Tirschenreuth (DE)
(72) Erfinder: Ackermann, Hans-Peter, 95643, Wondreb (DE)
(74) Vertreter: Dallmeyer, Georg

(56) Entgegenhaltungen:
- DE-A1- 3 238 900
- DE-A1- 19 813 474
- US-A- 2 242 247
- US-A- 2 753 947
- US-A- 3 640 609
- US-A- 4 250 975
- US-A- 4 746 206
- US-A- 5 694 259

## Beschreibung

Die Erfindung betrifft ein Baufahrzeug nach dem Oberbegriff des Anspruchs 1 sowie ein Rückspiegelpaar nach dem Oberbegriff des Anspruchs 1.

Bei Baumaschinen zur Bodenbearbeitung, insbesondere bei Straßenwalzen, ist es häufig erforderlich, dass mit einem exakten Seitenabstand zu beispielsweise einer Bordsteinkante, einem Haus oder einer bereits bearbeiteten Bodenfläche gefahren wird. Damit ein Fahrer der Baumaschine diesen Seitenabstand besser erkennen und einhalten kann, sind Baumaschinen bekannt, bei denen die Sitzposition zu einer der Seiten des Baufahrzeuges verschoben werden kann.

Um die hinter dem Fahrzeug befindliche Gegenstände zu erkennen, stellt der Fahrer vor der Fahrt die Rückspiegel des Fahrzeuges auf seine aktuelle Sitzposition und Körpergröße ein. Wird während des Arbeitsvorganges die Sitzposition des Fahrers nach links oder rechts verschoben, sind die Rückspiegel nicht mehr auf die aktuelle Sitzposition ausgerichtet. Der Fahrer muss daher die Rückspiegel erneut auf die aktuelle Sitzposition einstellen.

Da das Einstellen der Sitzposition aus Sicherheitsgründen nicht während der Fahrt geschehen soll, muss der Fahrer das Baufahrzeug anhalten, um die Rückspiegel einzustellen. Somit ist dieser Vorgang zeitaufwändig und unwirtschaftlich. Ferner kann es vorkommen, dass der Fahrer, um den Zeitaufwand zu minimieren, auf das Verändern der Sitzposition verzichtet, was ein ungenaues Arbeiten zur Folge hat, oder die Einstellung der Rückspiegel nach Veränderung der Sitzposition nicht vornimmt, so dass die Arbeitssicherheit gefährdet ist, da der Fahrer hinter dem Fahrzeug befindliche Gegenstände nicht sehen kann.

Ein Baufahrzeug mit einem horizontal seitlich verschiebbaren Fahrstand ist aus der DE 198 13 474 bekannt. Die DE 32 38 900 zeigt einen mechanisch an einen verstellbaren Fahrzeugsitz gekoppelten Rückblickspiegel.

Es ist daher die Aufgabe der vorliegenden Erfindung, ein Baufahrzeug zur Bodenbearbeitung sowie ein Rückspiegelpaar für ein Baufahrzeug der eingangs genannten Art derart weiterzubilden, dass die oben genannten Nachteile vermieden werden und eine Rückspiegeleinstellung bei Veränderung der Sitzposition des Fahrers auf eine einfache Art und Weise ermöglicht wird.

Zur Lösung der Aufgabe dienen die Merkmale des Anspruchs 1 bzw. 16.

Durch eine Verstellung der Winkelposition der Rückspiegel des Rückspiegelpaares in Abhängigkeit der Sitzposition des Fahrers wird in vorteilhafter Weise ermöglicht, dass der Fahrer die Sitzposition orthogonal zur Fahrtrichtung in entlang der Fahrzeugbreite verändern kann, ohne dass er dazu eine erneute Einstellung der Rückspiegel auf seine Sitzposition vornehmen muss. Da ferner die Rückspiegel des Rückspiegelpaares mechanisch miteinander gekoppelt sind, ist nur eine einzige Verstelleinrichtung zur Änderung der Winkelposition der Rückspiegel des Rückspiegelpaares notwendig und ein synchrones Verstellen ist auf eine besonders einfache Art und Weise möglich.

Vorzugsweise ist vorgesehen, dass das Rückspiegelpaar als ein vorderes Rückspiegelpaar in Fahrtrichtung des Baufahrzeuges vor dem Fahrer angeordnet ist.

In einer bevorzugten Ausführungsform ist ein weiteres Rückspiegelpaar als ein hinteres Rückspiegelpaar in Fahrtrichtung hinter dem Fahrer angeordnet.

Die Sitzposition des Fahrers kann über eine Detektiereinrichtung detektiert werden. Dadurch kann die genaue Sitzposition des Fahrers festgestellt werden und in Abhängigkeit davon eine Verstellung der Rückspiegel des Rückspiegelpaares vorgenommen werden.

Zur Veränderung der Sitzposition des Fahrers ist vorzugsweise ein Fahrersitz orthogonal zur Fahrtrichtung entlang der Fahrzeugbreite verschiebbar. Alternativ oder zusätzlich ist eine Fahrerkabine, in der sich der Fahrersitz befindet, orthogonal zur Fahrtrichtung entlang der Fahrzeugbreite verschiebbar.

Auf diese Weise ist es möglich, die Sitzposition des Fahrers auf eine einfache Art und Weise zu verändern.

Je nach Ausführungsbeispiel kann die Detektiereinrichtung an dem Fahrersitz und/oder an der Fahrerkabine angeordnet sein. Eine direkte Detektierung der Sitzposition des Fahrers ist somit mit Hilfe der Position des Fahrersitzes und/oder der Fahrerkabine auf möglich.

Die Detektiereinrichtung kann aus einem Sensor bestehen, der ein Signal an die Verstelleinrichtung des Rückspiegelpaares sendet.

Vorzugsweise ist vorgesehen, dass das Rückspiegelpaar über ein Seilzuggetriebe mechanisch gekoppelt ist. Ein Seilzuggetriebe ermöglicht es, dass eine einzige Verstelleinrichtung die Winkelverstellung der Rückspiegel vornehmen kann. Darüber hinaus ist ein Seilzuggetriebe konstruktiv einfach zu verwirklichen.

Die Verstelleinrichtung des Rückspiegelpaars umfasst vorzugsweise eine Antriebseinheit und eine Steuereinrichtung. Dabei kann die Antriebseinheit aus einem Elektromotor bestehen.

Vorzugsweise ist vorgesehen, dass die Steuereinrichtung aus einer Elektronikeinheit besteht, die die Antriebseinheit in Abhängigkeit des Signals des Sensors steuert. Dadurch ist es besonders einfach möglich, die Antriebseinheit in Abhängigkeit des Signals des Sensors und somit in Abhängigkeit der Sitzposition des Fahrers zu steuern, um eine Winkelverstellung des Rückspiegelpaares vorzunehmen.

Die Antriebseinheit kann das Seilzuggetriebe zur Verstellung der Winkelposition der Rückspiegel des Rückspiegelpaares direkt antreiben. Dadurch ist es möglich auf eine konstruktiv einfache Art und Weise die Verstellung der Winkelposition der Rückspiegel des Rückspiegelpaares vorzunehmen.

In einem besonders bevorzugten Ausführungsform, ist der Fahrersitz für eine Umkehr der Fahrtrichtung drehbar angeordnet. Dadurch kann der Fahrer auf eine bequemen Art und Weise das Fahrzeug bei umgekehrter Fahrtrichtung fahren. Darüber hinaus wird durch die Anordnung der hinteren Rückspiegel ein sicheres Fahren bei umgekehrter Fahrtrichtung ermöglicht.

Bei einem Ausführungsbeispiel ist vorgesehen, dass das hintere Rückspiegelpaar bei Drehung des Fahrersitzes auf die aktuelle Sitzposition ausrichtbar ist. Somit wird die Antriebseinheit des hinteren Rückspiegelpaares erst bei Drehung des Fahrersitzes aktiviert und nimmt die Verstellung der Winkelposition der Rückspiegel des hinteren Rückspiegelpaares vor. Dadurch wird vermieden, dass die während der Fahrt hinter dem Fahrer befindlichen Rückspiegel, die er zu diesem Zeitpunkt nicht benutzt, bei Veränderung der Sitzposition ständig bewegt werden. Der Verschleiß der Verstelleinrichtung der Rückspiegelpaare wird dadurch minimiert.

Im folgenden wird unter Bezugnahme auf die Figuren die Erfindung näher erläutert.

Es zeigen:

Fig. 1 eine Seitenansicht eines erfindungsgemäßen Baufahrzeuges

Fig. 2 eine schematische Draufsicht auf ein erfindungsgemäßes Baufahrzeug

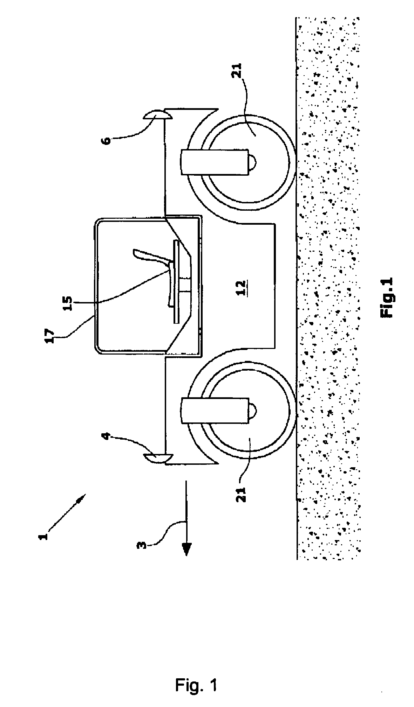

In Fig. 1 ist ein Baufahrzeug 1 zur Bodenbearbeitung in Form einer Straßenwalze schematisch dargestellt. Ein auf zwei Walzen 21 gelagerter Fahrzeugrahmen 12 trägt eine Fahrerkabine 17. Die Fahrtrichtung der Straßenwalze ist durch den Pfeil mit dem Bezugszeichen 3 angedeutet.

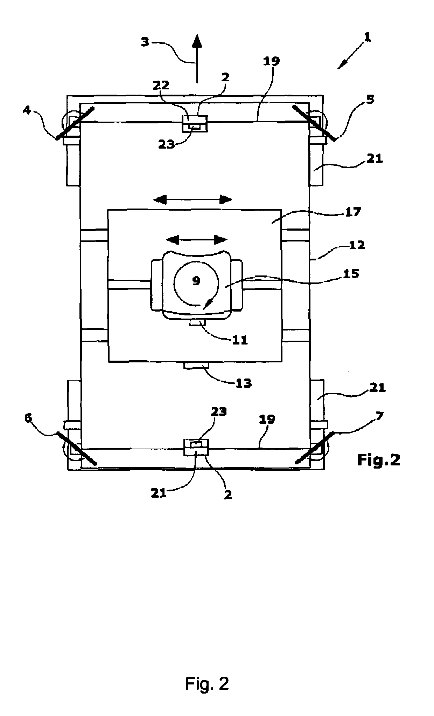

Gemäß Fig. 2 ist in Fahrtrichtung 3 vor der Fahrerkabine 17 ist ein vorderes Rückspiegelpaar 4,5 angeordnet. Die Rückspiegel des vorderen Rückspiegelpaares 4,5 sind an den Seiten des Fahrzeugrahmens 12 angeordnet. In Fahrtrichtung 3 hinter der Fahrerkabine 17 ist ein weiteres Rückspiegelpaar 6, 7 in gleicher Art und Weise angeordnet.

In einer nicht dargestellten Ausführungsform ist an dem Baufahrzeug 1 nur ein vorderes Rückspiegelpaar 4,5 angeordnet.

In der Fahrerkabine 17 ist ein Fahrersitz 15 angeordnet. Der Fahrersitz 15 kann orthogonal zur Fahrtrichtung entlang der Fahrzeugbreite hin- und hergeschoben werden, wie in der Fig. 2 durch einen Doppelfeil angedeutet. Zusätzlich oder alternativ zu dem Verschieben des Fahrersitzes 15 kann auch die gesamte Fahrzeugkabine 17 orthogonal zur Fahrtrichtung entlang der Fahrzeugbreite verschoben werden, wie in Fig. 2 ebenfalls durch einen Doppelpfeil angedeutet. Bei dem Verschieben der Fahrerkabine 17 ist der Verschiebeweg nicht durch die Erstreckung des Fahrzeugsrahmens in der Breite beschränkt, sondern die Fahrzeugkabine 17 kann so weit verschoben werden, dass sie seitlich über dem Fahrzeugrahmen 12 hinausragt.

Durch das Verschieben des Fahrersitzes 15 und/oder der Fahrerkabine 17 kann die Sitzposition 9 des Fahrers verändert werden. An dem Fahrersitz 15 ist eine Detektiereinrichtung 11 in Form eines Sensors befestigt. Eine weitere Detektiereinrichtung 13, die ebenfalls ein Sensor sein kann, ist an der Fahrerkabine 17 befestigt. Die Detektiereinrichtungen 11 und 13 detektieren die Verschiebung von dem Fahrersitz 15 und von der Kabine 17 und bestimmen auf diese Weise die Sitzposition 9 des Fahrers.

In zwei nicht dargestellten Ausführungsbeispielen sind entweder nur der Fahrersitz 15 oder die Fahrerkabine 17 verschiebbar angeordnet, so dass entsprechend nur die Detektiereinrichtung 11 bei dem Ausführungsbeispiel mit verschiebbarem Fahrersitz 15 bzw. die Detektiereinrichtung 13 bei dem Ausführungsbeispiel mit verschiebbarer Fahrerkabine 17 zur Bestimmung der Sitzposition 9 des Fahrers notwendig ist.

Die Rückspiegelpaare 4,5 bzw. 6,7 sind jeweils über ein Seilzuggetriebe 19 miteinander verbunden.

Eine Verstelleinrichtung 2 ist an dem Seilzuggetriebe 19 angeordnet und dient der Verstellung des Seilzuggetriebes 19 und somit der Verstellung der Rückspiegelpaare 4,5 bzw. 6,7. Die Verstelleinrichtung 2 umfasst eine Steuereinrichtung 23, die eine Elektronikeinheit sein kann, sowie eine Antriebseinheit 22. Die Antriebseinheit 22, die beispielsweise aus einem Elektromotor bestehen kann, treibt das Seilzuggetriebe 19 an. Im dargestellten Ausführungsbeispiel besteht das Seilzuggetriebe 19 jeweils nur aus einer einzigen Seilverbindung zu den einzelnen Rückspiegeln der Rückspiegelpaare 4,5 bzw. 6,7. Wenn bei Betätigung der Verstelleinrichtung zur Veränderung der Winkelposition der einzelnen Rückspiegel der Rückspiegelpaare 4,5 bzw. 6,7 das Seilzuggetriebe 19 gezogen wird, wird gleichzeitig eine nicht dargestellte Feder vorgespannt, die bei Bewegungsumkehr des Seilzuggetriebes 19 und entsprechender Umkehr der Winkelverstellbewegung der Rückspiegel entspannt wird und den benötigten Zug auf das Seilzuggetriebe 19 ausübt.

Alternativ ist jedoch auch ein Seilzuggetriebe 19 mit einer doppelten Seilzugverbindung zu den entsprechenden Rückspiegeln der Rückspiegelpaare 4,5 bzw. 6,7 möglich, durch die auf die Feder verzichtet werden kann.

In einem nicht dargestellten Ausführungsbeispiel wird das Seilzuggetriebe 19 durch ein Stangengetriebe ersetzt.

Bei Veränderung der Sitzposition 9 durch das Verschieben des Fahrersitzes 15 und/oder der Fahrerkabine 17 detektiert die Detektiereinheit 11 bzw. 13 die Verschiebebewegung und übermittelt ein Signal an die Steuereinrichtung 23. Die Steuereinrichtung 23 setzt die Antriebseinheit 22 in Betrieb, so dass über das Seilzuggetriebe 19 die Winkelposition der Rückspiegel des entsprechenden Rückspiegelpaares 4, 5 bzw. 6, 7 verändert und an die Sitzposition 9 des Fahrers angepasst wird.

Der Fahrersitz 15 kann komplett gedreht werden, so dass bei Umkehr der Fahrtrichtung 3 in entgegengesetzter Richtung der Fahrer stets in die aktuelle Fahrtrichtung sehen kann. Nach einer Drehung des Fahrersitzes 15 um 180° kann der Fahrer in dem in Fig. 2 dargestellten Ausführungsbeispiel das Rückspiegelpaar 6, 7 nutzen. In dem in Fig. 2 dargestellten Ausführungsbeispiel werden die Winkelpositionen der Rückspiegel von beiden Rückspiegelpaaren stets synchron und stufenlos an die aktuelle Sitzposition 9 angepasst, bzw. bei Veränderung der Sitzposition 9 geführt. In einem alternativen nicht dargestellten Ausführungsbeispiel werden nur die jeweils von dem Fahrer benutzten Rückspiegel des Rückspiegelpaares 4,5 bei Veränderung der Sitzposition 9 mitgeführt. Durch eine Drehung des Fahrersitzes 15 werden dann die zuvor nicht genutzten Rückspiegel 6,7 an die Sitzposition 9 angepasst.

## Patentansprüche

1. Rückspiegelpaar für ein Baufahrzeug (1) zur Bodenbearbeitung, insbesondere Straßenwalze, mit einem Fahrzeugrahmen (12), mit orthogonal zur Fahrtrichtung (3) entlang der Fahrzeugbreite veränderbarer Sitzposition (9) des Fahrers und mit mindestens einem Rückspiegelpaar (4,5; 6,7), wobei die Rückspiegel des Rückspiegelpaares (4,5; 6,7) jeweils an den Seiten des Fahrzeugrahmens (12) angeordnet sind, **dadurch gekennzeichnet, dass** die Rückspiegel des Rückspiegelpaares (4,5; 6,7) mechanisch miteinander gekoppelt sind und eine Verstelleinrichtung (7) die Winkelposition der Rückspiegel des Rückspiegelpaares (4,5; 6,7) synchron und stufenlos in Abhängigkeit von der Sitzposition (9) des Fahrers entlang der Fahrzeugbreite verstellt und an die aktuelle Sitzposition (9) des Fahrers anpasst.

2. Rückspiegelpaar für ein Baufahrzeug nach Anspruch 1, **dadurch gekennzeichnet, dass** das Rückspiegelpaar (4,5) ein vorderes Rückspiegelpaar (4,5) ist und in Fahrtrichtung (3) des Baufahrzeuges vor dem Fahrer anordbar ist.

3. Rückspiegelpaar für ein Baufahrzeug nach Anspruch 2, **dadurch gekennzeichnet, dass** das Rückspiegelpaar (6,7) ein hinteres Rückspiegelpaar (6,7) ist und in Fahrtrichtung des Baufahrzeuges hinter dem Fahrer anordbar ist.

4. Rückspiegelpaar für ein Baufahrzeug nach einem der Ansprüche 1 bis 3, **dadurch gekennzeichnet, dass** eine Detektiereinrichtung (11,13) die Sitzposition (9) des Fahrers detektiert.

5. Rückspiegelpaar für ein Baufahrzeug nach einem der Ansprüche 1 bis 4, **dadurch gekennzeichnet, dass** ein Fahrersitz (15) des Baufahrzeuges (1) zur Veränderung der Sitzposition (9) des Fahrers orthogonal zur Fahrtrichtung (3) entlang der Fahrzeugbreite verschiebbar ist.

6. Rückspiegelpaar für ein Baufahrzeug nach einem der Ansprüche 1 bis 5, **dadurch gekennzeichnet, dass** eine Fahrerkabine (17) des Baufahrzeuges mit einem Fahrersitz (15) zur Veränderung der Sitzposition (9) des Fahrers orthogonal zur Fahrtrichtung (3) entlang der Fahrzeugbreite verschiebbar ist.

7. Rückspiegelpaar für ein Baufahrzeug nach einem der Anspruch 5 oder 6, **dadurch gekennzeichnet, dass** die Detektiereinrichtung (11,13) an dem Fahrersitz (15) und/oder an der Fahrerkabine (17) anordbar ist.

8. Rückspiegelpaar für ein Baufahrzeug nach einem der Ansprüche 4 bis 7, **dadurch gekennzeichnet, dass** Detektiereinrichtung (11,13) aus einem Sensor besteht, der ein Signal an die Verstelleinrichtung (2) des Rückspiegelpaares (4,5; 6,7) sendet.

9. Rückspiegelpaar für ein Baufahrzeug nach einem der Ansprüche 1 bis 8, **dadurch gekennzeichnet, dass** das Rückspiegelpaar (4,5; 6,7) über ein Seilzuggetriebe (19) mechanisch gekoppelt ist.

10. Rückspiegelpaar für ein Baufahrzeug nach einem der Ansprüche 1 bis 9, **dadurch gekennzeichnet, dass** die Verstelleinrichtung (2) des Rückspiegelpaares (4,5; 6,7) eine Antriebseinheit (22) und eine Steuereinrichtung (23) umfasst.

11. Rückspiegelpaar für ein Baufahrzeug nach Anspruch 10, **dadurch gekennzeichnet, dass** die Antriebseinheit (22) ein Elektromotor ist.

12. Rückspiegelpaar für ein Baufahrzeug nach Anspruch 10 oder 11, **dadurch gekennzeichnet, dass** die Steuereinrichtung (23) aus einer Elektronikeinheit besteht, die die Antriebseinheit (22) in Abhängigkeit des Signals der Detektiereinrichtung (11,13) steuert.

13. Rückspiegelpaar für ein Baufahrzeug nach einem der Ansprüche 10 bis 12, **dadurch gekennzeichnet, dass** die Antriebseinheit (22) das Seilzuggetriebe (19) zur Verstellung der Winkelposition der Rückspiegel des Rückspiegelpaares (4,5; 6,7) direkt antreibt.

14. Rückspiegelpaar für ein Baufahrzeug nach einem der Ansprüche 5 bis 13, **dadurch gekennzeichnet, dass** der Fahrersitz (15) für eine Umkehr der Fahrtrichtung (3) drehbar angeordnet ist.

15. Rückspiegelpaar für ein Baufahrzeug nach Anspruch 14, **dadurch gekennzeichnet, dass** das hintere Rückspiegelpaar (6, 7) bei Drehung des Fahrersitzes (15) auf die aktuelle Sitzposition (9) ausrichtbar ist.

16. Baufahrzeug (1) zur Bodenbearbeitung mit einem Rückspiegelpaar nach einem der Ansprüche 1 bis 15.

## Claims

1. A pair of rearview mirrors for a ground working construction vehicle (1), in particular a road roller, comprising a vehicle frame (12), a seat position (9) of the driver adjustable along the width of the vehicle, and at least one pair of rearview mirrors (4,5; 6,7), the rearview mirrors of the pair of rearview mirrors (4,5; 6,7) being arranged at the sides of the vehicle frame (12), respectively, **characterized in that** the rearview mirrors of the pair of rearview mirrors (4,5; 6,7) are mechanically coupled with each other and an adjustment means (7) adjusts the angular position of the rearview mirrors of the pair of rearview mirrors (4,5; 6,7) synchronously and smoothly along the vehicle width depending on the seat position (9) of the driver and adjusts said angular position to the present seat position (9) of the driver.

2. The pair of rearview mirrors for a construction vehicle according to claim 1, **characterized in that** the pair of rearview mirrors (4, 5) is a front pair of rearview mirrors (4, 5) and may be arranged in front of the driver, seen in the traveling direction (3) of the construction vehicle.

3. The pair of rearview mirrors for a construction vehicle according to claim 2, **characterized in that** the pair of rearview mirrors (6, 7) is a rear pair of rearview mirrors (6, 7) and may be arranged behind the driver, seen in the traveling direction (3) of the construction vehicle.

4. The pair of rearview mirrors for a construction vehicle according to one of claims 1 to 3, **characterized in that** a detecting means (11, 13) detects the seat position (9) of the driver.

5. The pair of rearview mirrors for a construction vehicle according to one of claims 1 to 4, **characterized in that** a driver's seat (15) of the construction vehicle (1) is displaceable along the width of the vehicle orthogonal to the traveling direction (3) to change the seat position (9) of the driver.

6. The pair of rearview mirrors for a construction vehicle according to one of claims 1 to 5, **characterized in that** a driver's cabin (17) of the construction vehicle, including a driver's seat (15), is displaceable along the width of the vehicle orthogonal to the traveling direction (3) to change the seat position (9) of the driver.

7. The pair of rearview mirrors for a construction vehicle according to one of claims 5 or 6, **characterized in that** the detecting means (11, 13) may be arranged at the driver's seat (15) and/or at the driver's cabin (17).

8. The pair of rearview mirrors for a construction vehicle according to one of claims 4 or 7, **characterized in that** the detecting means (11, 13) is a sensor that transmits a signal to the adjusting means (2) of the pair of rearview mirrors (4,5; 6,7).

9. The pair of rearview mirrors for a construction vehicle according to one of claims 1 to 8, **characterized in that** the pair of rearview mirrors (4, 5; 6, 7) is coupled mechanically via a cable linkage (19).

10. The pair of rearview mirrors for a construction vehicle according to one of claims 1 to 9, **characterized in that** the adjustment means (2) of the pair of rearview mirrors (4, 5; 6, 7) comprises a drive unit (22) and a control device (23).

11. The pair of rearview mirrors for a construction vehicle according to claim 10, **characterized in that** the drive unit (22) is an electric motor.

12. The pair of rearview mirrors for a construction vehicle according to one of claims 10 or 11, **characterized in that** the control unit (23) is an electronic unit controlling the drive unit (22) in dependence on the signal from the detecting means (11, 13).

13. The pair of rearview mirrors for a construction vehicle according to one of claims 10 to 12, **characterized in that** the drive unit (22) drives the cable linkage (19) directly to adjust the angular position of the rearview mirrors of the pair of rearview mirrors (4, 5; 6, 7).

14. The pair of rearview mirrors for a construction vehicle according to one of claims 5 to 13, **characterized in that** the driver's seat (15) is rotatably arranged for a reversal of the traveling direction (3).

15. The pair of rearview mirrors for a construction vehicle according to claim 14, **characterized in that** the rear pair of rearview mirrors (6, 7) is adjustable to the given seat position (9) when the driver's seat (15) is turned.

16. A ground working construction vehicle (1) comprising a pair of rearview mirrors according to one of claims 1 to 15.

## Revendications

1. Paire de rétroviseurs pour engin de construction (1) destiné au traitement de sols, notamment pour rouleau compresseur, l'engin de construction comportant un châssis (12), une position de siège (9) du conducteur pouvant être modifiée orthogonalement au sens de roulement (3) dans la largeur de l'engin et au moins une paire de rétroviseurs (4, 5 ; 6, 7), les rétroviseurs de la paire de rétroviseurs (4, 5 ; 6, 7) étant disposés de chaque côté du châssis (12), **caractérisée en ce que** les rétroviseurs de la paire de rétroviseurs (4, 5 ; 6, 7) sont couplés mécaniquement l'un à l'autre et **en ce qu'**un dispositif de réglage (7) règle la position angulaire des rétroviseurs de la paire de rétroviseurs (4, 5 ; 6, 7) de façon synchrone et progressive en fonction de la position de siège (9) du conducteur dans la largeur de l'engin et l'adapte à la position de siège (9) du conducteur.

2. Paire de rétroviseurs pour engin de construction selon la revendication 1, **caractérisée en ce que** la paire de rétroviseurs (4, 5) est une paire de rétroviseurs avant (4, 5) et peut être placée en avant du conducteur par référence au sens de roulement (3) de l'engin de construction.

3. Paire de rétroviseurs pour engin de construction selon la revendication 2, **caractérisée en ce que** la paire de rétroviseurs (6, 7) est une paire de rétroviseurs arrière (6, 7) et peut être placée derrière le conducteur par référence au sens de roulement de l'engin de construction.

4. Paire de rétroviseurs pour engin de construction selon l'une des revendications 1 à 3, **caractérisée en ce qu'**un dispositif de détection (11, 13) détecte la position de siège (9) du conducteur.

5. Paire de rétroviseurs pour engin de construction selon l'une des revendications 1 à 4, **caractérisée en ce qu'**un siège de conducteur (15) de l'engin de construction (1) peut être déplacé dans la largeur de l'engin pour modifier la position de siège (9) du conducteur orthogonalement au sens de roulement (3).

6. Paire de rétroviseurs pour engin de construction selon l'une des revendications 1 à 5, **caractérisée en ce qu'**une cabine de conducteur (17) de l'engin de construction comportant un siège de conducteur (15) peut être déplacée dans la largeur de l'engin afin de modifier la position de siège (9) du conducteur orthogonalement au sens de déplacement (3).

7. Paire de rétroviseurs pour engin de construction selon la revendication 5 ou la revendication 6, **caractérisée en ce que** le dispositif de détection (11, 13) peut être placé au niveau du siège de conducteur (15) et/ou au niveau de la cabine de conducteur (17).

8. Paire de rétroviseurs pour engin de construction selon l'une des revendications 4 à 7, **caractérisée en ce que** le dispositif de détection (11, 13) consiste en un capteur qui envoie un signal au dispositif de réglage (2) de la paire de rétroviseurs (4, 5 ; 6, 7).

9. Paire de rétroviseurs pour engin de construction selon l'une des revendications 1 à 8, **caractérisée en ce que** la paire de rétroviseurs (4, 5 ; 6, 7) sont couplés mécaniquement par une transmission par câble.

10. Paire de rétroviseurs pour engin de construction selon l'une des revendications 1 à 9, **caractérisée en ce que** le dispositif de réglage (2) de la paire de rétroviseurs (4, 5 ; 6, 7) comporte une unité d'entraînement (22) et une unité de commande (23).

11. Paire de rétroviseurs pour engin de construction selon la revendication 10, **caractérisée en ce que** l'unité d'entraînement (22) est un moteur électrique.

12. Paire de rétroviseurs pour engin de construction selon la revendication 10 ou 11, **caractérisée en ce que** le dispositif de commande (23) est constitué d'une unité électronique qui commande l'unité d'entraînement (22) en fonction du signal du dispositif de détection (11, 13).

13. Paire de rétroviseurs pour engin de construction selon l'une des revendications 10 à 12, **caractérisée en ce que** l'unité d'entraînement (22) entraîne directement la transmission par câble (19) afin de régler la position angulaire des rétroviseurs de la paire de rétroviseurs (4, 5 ; 6, 7).

14. Paire de rétroviseurs pour engin de construction selon l'une des revendications 5 à 13, **caractérisée en ce que** le siège de conducteur (15) est placé de façon à pouvoir tourner lorsque l'on inverse le sens de roulement (3).

15. Paire de rétroviseurs pour engin de construction selon la revendication 14, **caractérisée en ce que** la paire de rétroviseurs arrière (6, 7) peut être dirigée vers la position de siège (9) actuelle lorsque l'on fait tourner le siège de conducteur (15).

16. Engin de construction (1) destiné au traitement de sols, ledit engin de construction comportant une paire de rétroviseurs selon l'une des revendications 1 à 15.
